# EUROPÄISCHE PATENTSCHRIFT

(11) **EP 0 598 878 B1**
(45) Veröffentlichungstag und Bekanntmachung des Hinweises auf die Patenterteilung: **02.01.1997**
(21) Anmeldenummer: 93912887.2
(22) Anmeldetag: 04.06.1993
(51) Int. Cl.: E05D 7/00, E05D 5/12, B21H 5/00, F16H 1/16

(54) **EINSTELLBARE HALTERUNG FÜR LAGER- UND GELENKZAPFEN, INSBESONDERE ZUR VERWENDUNG AN TÜREN UND TOREN**
ADJUSTABLE FIXING DEVICE FOR PIVOT PINS AND BEARING JOURNALS, USEFUL IN PARTICULAR FOR DOORS AND GATES
FIXATION REGLABLE DE TOURILLONS ET DE PIVOTS, UTILE NOTAMMENT POUR PORTES ET PORTAILS

(30) Priorität: 05.06.1992 DE 4218639
(43) Veröffentlichungstag der Anmeldung: 01.06.1994
(73) Patentinhaber: Döring, Erich, Dr.h.c., CH-9442 Berneck (CH)
(72) Erfinder: Döring, Erich, Dr.h.c., CH-9442 Berneck (CH)
(74) Vertreter: Goetz, Rupert, Dipl.-Ing.
(86) Internationale Anmeldenummer: EP9301415
(87) Internationale Veröffentlichungsnummer: WO9325789

(56) Entgegenhaltungen:
- WO-A-89/04906
- DE-A- 4 032 808
- FR-A- 2 646 201
- US-A- 1 787 017

## Beschreibung

Die Erfindung betrifft ein Verfahren nach dem Oberbegriff des Anspruchs 1 sowie eine einstellbare Halterung nach dem Oberbegriff des Anspruchs 2.

Sektionaltore, die von mehreren über- oder nebeneinander angeordneten, gelenkig miteinander verbundenen Paneelen gebildet sind, haben normalerweise an den Paneelen angeschraubte Lagerböcke für Führungsrollen. Die Lagerböcke haben Langlöcher in horizontaler und/oder vertikaler Richtung, damit die Achslage der Führungsrollen an unterschiedliche örtliche Verhältnisse angepaßt werden kann. Zum Verstellen der Führungsrollen müssen an jedem der Lagerböcke normalerweise vier Schrauben gelöst werden, dann wird der Lagerbock, meist mit einigen leichten Hammerschlägen, in die gewünschte Stellung gebracht, und anschließend müssen die Schrauben wieder festgezogen werden. Wenn ein Sektionaltor beispielsweise fünf Paneele aufweist, bedeutet dies, daß insgesamt vierzig Schrauben zu lösen und wieder festzuziehen sind. Beim Festziehen der Schrauben kommt es häufig vor, daß sich die gewünschte Einstellung des Lagerbocks wieder etwas verändert, sodaß die Einstellprozedur wiederholt werden muß.

Entsprechendes gilt auch für einstellbare Gelenke zwischen den Paneelen von Sektionaltoren sowie für Drehangeln, die auch als Bänder bezeichnet werden, von Türen und Toren.

Aus FR-A 2 646 201 ist eine einstellbare Halterung der in den Oberbegriffen der Ansprüche 1 und 2 genannten Art bekannt, deren Drehkörper eine von vorneherein fertig ausgebildete Schneckenradverzahnung aufweist. Eine solche Schneckenradverzahnung erfordert einen nennenswerten Herstellungsaufwand und läßt sich mit der Einstellschraube nur dann fehlerfrei paaren, wenn diese mit einem passenden Schneckengewinde versehen ist.

Der Erfindung liegt die Aufgabe zugrunde, eine einfacher herstellbare und dennoch feinfühlig einstellbare Halterung für Lager- und Gelenkzapfen zu schaffen.

Erfindungsgemäß ist diese Aufgabe durch ein Verfahren mit den Merkmalen des Anspruchs 1 und durch eine Halterung mit den Merkmalen des Anspruchs 2 gelöst.

Die erfindungsgemäße Halterung wird in der Weise hergestellt, daß der Drehkörper in einer beliebigen Drehwinkelstellung in die Lagerbohrung des Lagerbocks eingeschoben wird und dann die Einstellschraube eingeschraubt wird. Um dies zu erleichtern, hat der Lagerbock eine vorbereitete Querbohrung, deren Durchmesser etwas größer ist als der Außendurchmesser des Schraubengewindes. Beim Eindrehen der Einstellschraube schneiden deren Gewindegänge in den Drehkörper. Anschließend wird die Einstellschraube in einer bestimmten axialen Stellung festgelegt, beispielsweise durch Aufschrauben einer Mutter oder durch Einrasten eines Sicherungsrings.

Nach der Montage einer erfindungsgemäßen Halterung, beispielsweise an einem Paneel eines Sektionaltors, oder auch an einem Türblatt oder -stock oder an einem Torflügel oder -pfosten, wird die Schraube bei Bedarf so gedreht, daß sie den Drehkörper samt in ihm steckendem Lager- oder Gelenkzapfen in die gewünschte Stellung bringt. Dabei ergänzen sich die im Drehkörper beim Zusammenbau der Halterung entstandenen Gewindegänge allmählich zu einer schneckenradartigen Verzahnung. Der Drehkörper läßt sich um beliebig große Winkel drehen, wobei die in ihm ausgebildete Aufnahmebohrung je nach ihrer Anordnung in bezug auf die zentrale Achse unterschiedliche Stellungen annimmt. Die Aufnahmebohrung ist beispielsweise für einen Lagerzapfen bestimmt, auf dem eine Rolle gelagert ist. Statt dessen kann die Aufnahmebohrung einen Gelenkzapfen eines Tür- oder Torbandes aufnehmen, wobei dieser Gelenkzapfen im Drehkörper entweder drehbar gelagert oder drehfest gehalten sein kann.

Vorteilhafte Weiterbildungen der Erfindung ergeben sich aus den Unteransprüchen.

Ein Ausführungsbeispiel der Erfindung wird im folgenden anhand schematischer Zeichnungen mit weiteren Einzelheiten erläutert. Es zeigen:
- Fig. 1: eine perspektivische Ansicht einer ersten Ausführungsform einer erfindungsgemäßen Halterung,
- Fig. 2: den Querschnitt II-II in Fig. 1,
- Fig. 3: eine der Fig. 2 entsprechende Stirnansicht einer zweiten Ausführungsform,
- Fig. 4: die Ansicht in Richtung des Pfeils IV in Fig. 3,
- Fig. 5: eine Seitenansicht einer dritten Ausführungsform,
- Fig. 6: eine Seitenansicht einer vierten Ausführungsform,
- Fig. 7: die Ansicht in Richtung des Pfeils VII in Fig. 5 und 6,
- Fig. 8: eine der Fig. 2 entsprechene Ansicht einer fünften Ausführungsform, und
- Fig. 9: eine perspektivische Ansicht einer sechsten Ausführungsform der Erfindung.

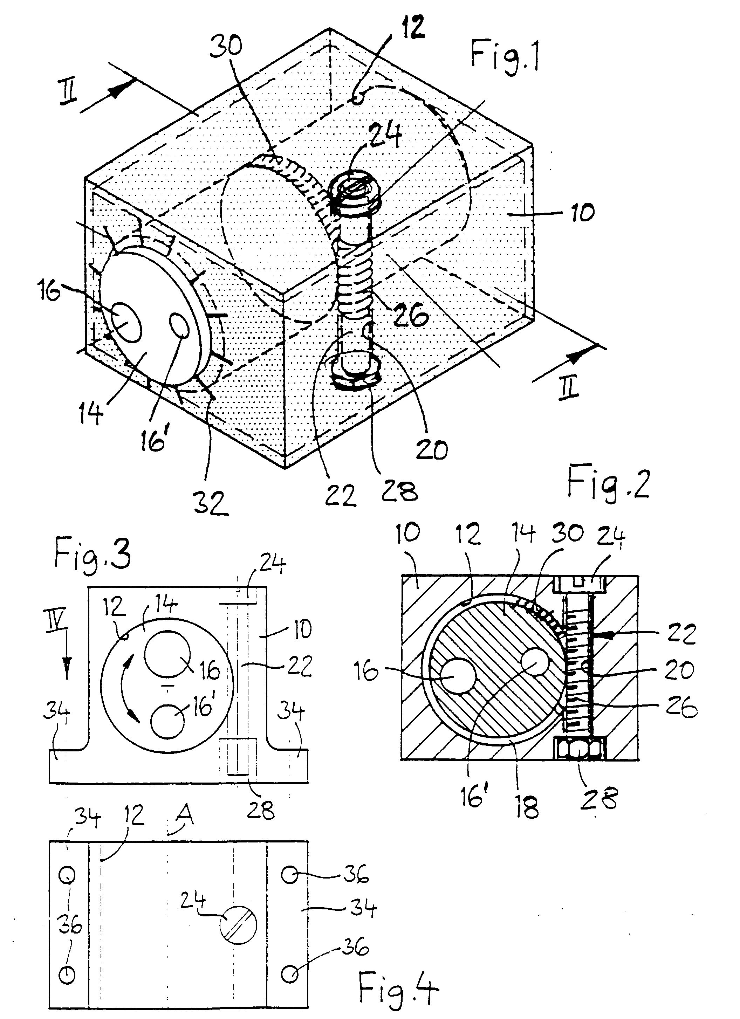

Zu allen dargestellten Ausführungsformen einer erfindungsgemäßen Halterung gehört ein Lagerbock 10, der in Fig. 1 und 2 als Rechteckprisma dargestellt ist.Der Lagerbock 10 hat eine Lagerbohrung 12, die eine zentrale Achse A definiert. In der Lagerbohrung 12 ist ein Drehkörper 14 gelagert, der mindestens eine exzentrische Aufnahmebohrung 16, gemäß Fig. 1 bis 4 und 8 jedoch zwei exzentrische Aufnahmebohrungen 16 und 16' unterschiedlichen Durchmessers aufweist. Wahlweise in die eine oder andere dieser Aufnahmebohrungen 16 und 16' läßt sich ein Lager- oder Gelenkzapfen einschieben und, falls nötig, in ihr gegen Drehen und/oder axiale Verschiebung sichern. Die im folgenden als Aufnahmeachsen B bzw. B' bezeichneten geometrischen Achsen der Aufnahmebohrungen 16 und 16' erstrecken sich in je einem Abstand parallel zur zentralen Achse A. Die Lage der Aufnahmeachsen B und B' hängt von der Drehwinkelstellung des Drehkörpers 14 ab.

In dem Drehkörper 14 ist, ungefähr in der Mitte zwischen seinen beiden Enden, eine Ringnut 18 eingearbeitet. Der Lagerbock 10 weist eine Querbohrung 20 auf, welche die Lagerbohrung 12 im Bereich der Ringnut 18 durchdringt und eine Einstellschraube 22 aufnimmt. Die Einstellschraube 22 ist eine handelsübliche Schraube mit einem Kopf 24 und einem Gewinde 26. Der Außendurchmesser des Gewindes 26 ist so bemessen, daß die Einstellschraube 22 in der Querbohrung 20 im wesentlichen spielfrei, jedoch frei drehbar derart aufgenommen ist, daß das Gewinde 26 in die Ringnut 18 des Drehkörpers 14 einschneidet. Auf das Ende der Einstellschraube 22 ist eine selbstsichernde Mutter 28 derart aufgeschraubt, daß die Einstellschraube in axialer Richtung im wesentlichen spielfrei im Lagerbock 10 gelagert und zusammen mit der Mutter 28 drehbar ist.

Durch Drehen der Einstellschraube 22 entsteht in der Ringnut 18 allmählich eine Verzahnung 30 der bei Schneckenrädern üblichen Art. Damit dies mit einem mäßigen, auf den Kopf 24 der Einstellschraube 22 beispielsweise mit einem Schraubendreher ausgeübtem Drehmoment möglich ist, besteht der Drehkörper 14 vorzugsweise aus verhältnismäßig weichem Metall wie Aluminium oder Zinkguß oder einem nicht allzuharten Polyamid oder Polyurethan oder einem anderen geeigneten Kunststoff.An einer Stirnseite des Lagerbocks 10 kann gemäß Fig. 1 eine Skala 32 ausgebildet sein, die es erleichtert, den Drehkörper 14 reproduzierbar in bestimmte Winkelstellungen zu drehen.

Gemäß Fig. 3 und 4 hat der Lagerbock 10 ein Paar Flansche 34 mit Befestigungslöchern 36 zur Befestigung an einem Torblatt oder -paneel oder an einem Türstock, Torpfosten oder dgl..

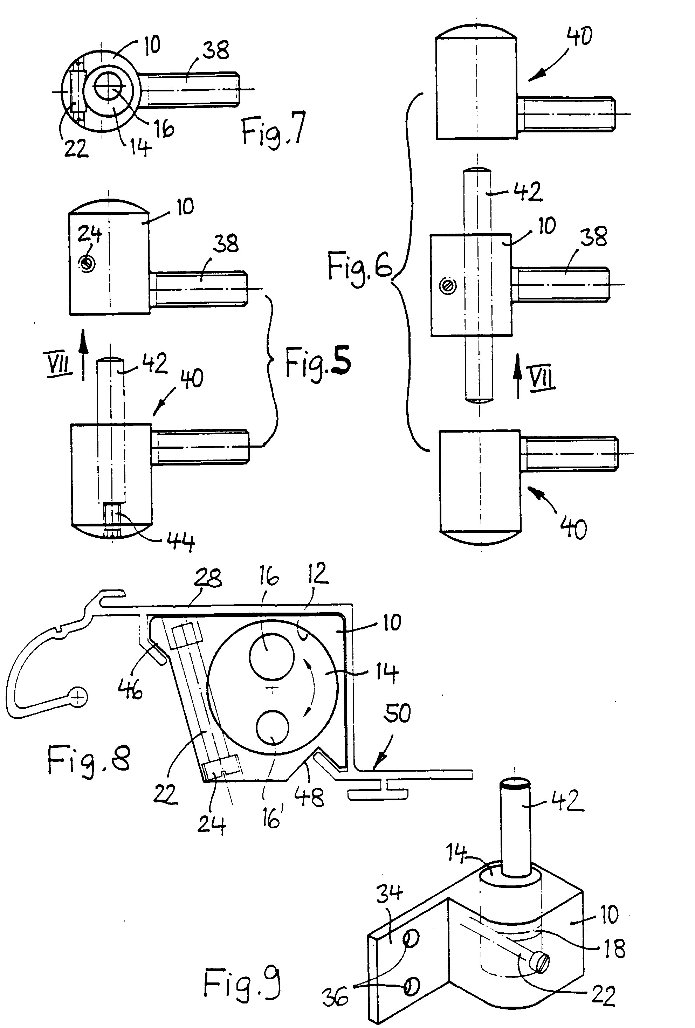

Bei den in Fig. 5 bis 7 dargestellten Ausführungsformen ist eine erfindungsgemäße Halterung Bestandteil eines sogenannten Bandes oder Scharniers von bekannter äußerer Gestalt. Der Lagerbock 10 hat eine zylindrische Außenfläche, von der ein Gewindezapfen 38 zur Befestigung an einem Türblatt oder dgl. wegragt. Gemäß Fig. 5 bildet die erfindungsgemäße Halterung den oberen Teil eines zweiteiligen Türbandes und wirkt mit einem handelsüblichen Unterteil 40 zusammen, in dem ein zylindrischer Lagerzapfen 42 steckt. Der Lagerzapfen 42 ist mittels einer weiteren Einstellschraube 44 höheneinstellbar und paßt in die Aufnahmebohrung 16 des Drehkörpers 14. Durch Drehen der Einstellschraube 22 läßt sich der Lagerbock 10, und somit auch das von ihm getragene Türblatt, innerhalb des zugehörigen Türrahmens waagerecht in der Türblattebene und im rechten Winkel dazu verstellen. Durch Drehen der weiteren Einstellschraube 44 läßt sich der Lagerbock 10, und somit auch das von ihm getragene Türblatt zusätzlich in der Höhe verstellen.

Gemäß Fig. 6 bildet eine erfindungsgemäße Halterung das Mittelteil eines dreiteiligen Türbandes, bei dem ein entsprechend längerer Lagerzapfen 42 nach oben und nach unten aus der Aufnahmebohrung 16 des Drehkörpers 14 herausragt und in montiertem Zustand in zwei handelsübliche Scharnierteile 40 eingreift.

Die Ausführungsform gemäß Fig. 8 unterscheidet sich von der in Fig. 1 und 2 dargestellten dadurch, daß der Lagerbock 10 als asymmetrisches Prisma mit einer Schulter 46 und einer Nut 48 ausgebildet ist und sich in ein Strangpreßprofil 50 einschieben läßt.

Auch in der Ausführungsform gemäß Fig. 9 hat der Lagerbock 10 ein asymmetrisches Profil, jedoch mit einem Flansch 34, der Befestigungslöcher 36 aufweist.

## Patentansprüche

1. Verfahren zum Zusammenbauen und Einstellen einer Halterung für Lager- und Gelenkzapfen, insbesondere zur Verwendung an Türen und Toren, mit
- einem Lagerbock (10), der eine Lagerbohrung (12) mit einer zentralen Achse (A) aufweist,
- einem Drehkörper (14), der in der Lagerbohrung (12) um die zentrale Achse (A) dreheinstellbar gelagert ist,
- mindestens einer zum Aufnehmen eines Lager- oder Gelenkzapfens (42) im Drehkörper (14) ausgebildeten Aufnahmebohrung (16) mit einer von der zentralen Achse (A) abweichenden Aufnahmeachse (B),
- einer Querbohrung (20), die sich quer zur Lagerbohrung (12), diese durchdringend, durch den Lagerbock (10) erstreckt, und
- einer Einstellschraube (22), die in der Querbohrung (20) drehbar, jedoch axial unverschiebbar gehalten ist und in eine im Drehkörper (14) ausgebildete Verzahnung (30) in der Art einer Schneckenradverzahnung eingreift,
- so daß eine Drehbewegung der Einstellschraube (22) über diese Verzahnung (30) auf den Drehkörper (14) übertragbar ist, dadurch gekennzeichnet, daß
- der noch unverzahnte Drehkörper (14) in einer beliebigen Drehwinkelstellung in den Lagerbock (10) eingeschoben wird,
- die Einstellschraube (22) in die Querbohrung (20) eingedreht wird, wobei ihr Gewinde (26) in den Drehkörper (14) einschneidet und darin einen Teil der Verzahnung (30) ausbildet, und
- die Verzahnung (30) bei Bedarf weiter ausgebildet wird, indem die Einstellschraube (22) weiter gedreht wird, nachdem sie in einer bestimmten axialen Stellung festgelegt worden ist.

2. Einstellbare Halterung zum Durchführen des Verfahrens nach Anspruch 1, für Lager- und Gelenkzapten, insbesondere zur Verwendung an Türen und Toren, mit
- einem Lagerbock (10), der eine Lagerbohrung (12) mit einer zentralen Achse (A) aufweist,
- einem Drehkörper (14), der in der Lagerbohrung (12) um die zentrale Achse (A) dreheinstellbar gelagert ist,
- mindestens einer zum Aufnehmen eines Lager- oder Gelenkzapfens (42) im Drehkörper (14) ausgebildeten Aufnahmebohrung (16) mit einer von der zentralen Achse (A) abweichenden Aufnahmeachse (B),
- einer Querbohrung (20), die sich quer zur Lagerbohrung (12), diese durchdringend, durch den Lagerbock (10) erstreckt, und
- einer Einstellschraube (22), die in der Querbohrung (20) drehbar, jedoch axial unverschiebbar gehalten ist und in eine im Drehkörper (14) ausgebildete Verzahnung (30) in der Art einer Schneckenradverzahnung eingreift,
- so daß eine Drehbewegung der Einstellschraube (22) über diese Verzahnung (30) auf den Drehkörper (14) übertragbar ist, dadurch gekennzeichnet, daß der Drehkörper (14) mindestens einen Abschnitt einer vorbereiteten Ringnut (18) aufweist, in dem sich beim Drehen der Einstellschraube (22) die schneckenradartige Verzahnung (30) ausbildet.

3. Einstellbare Halterung nach Anspruch 2,
dadurch gekennzeichnet, daß die Aufnahmeachse (B) sich parallel zur zentralen Achse (A) erstreckt.

4. Einstellbare Halterung nach Anspruch 2,
dadurch gekennzeichnet, daß die Aufnahmeachse (B) sich unter einem spitzen Winkel zur zentralen Achse (A) erstreckt.

5. Einstellbare Halterung nach einem der Ansprüche 2 bis 4, dadurch gekennzeichnet, daß der Drehkörper (14) zwei oder mehr Aufnahmebohrungen (16, 16') unterschiedlichen Durchmessers und/ oder in unterschiedlichem Abstand von der zentralen Achse (A) aufweist.

6. Einstellbare Halterung nach einem der Ansprüche 2 bis 5, dadurch gekennzeichnet, daß der Drehkörper (14) aus weichem Metall wie Aluminium oder Zinkguß besteht.

7. Einstellbare Halterung nach einem der Ansprüche 2 bis 5, dadurch gekennzeichnet, daß der Drehkörper (14) aus Kunststoff wie Polyamid oder Polyurethan besteht.

## Claims

1. A method of assembling and adjusting supports for journals and hinge pins, especially for use with doors and gates, comprising
- a bearing block (10) formed with a bearing bore (12) which has a central axis (A),
- a rotary member (14) wich is supported in the bearing bore (12) for rotational adjustment about the central axis A,
- at least one receiving bore (16) formed in the rotary member (14) to receive a journal or hinge pin (42) and having a receiving axis (B) which differs from the central axis (A),
- a transverse bore (20) which extends transversely to the bearing bore (12), penetrating the same, through the bearing block (10), and
- a setscrew (22) which is retained in the transverse bore (20) to be rotatable but not movable axially, and which engages a toothing (30) formed in the rotary member (14) in the manner of a worm gear toothing,
- so that a rotary movement of the setscrew (22) can be transmitted to the rotary member (14) via said toothing (30),
characterized, in that
- the still untoothed rotary member (14) is inserted in the bearing block (10) at a random rotational position,
- the setscrew (22) is screwed into the transverse bore (20), its thread (26) cutting into the rotary member (14) and forming a part of the toothing (30) therein, and
- the toothing (30) is formed further, if required, in that the setscrew (22) is turned further after it was fixed in a determined axial position.

2. An adjustable support for carrying out the method according to claim 1, for journals and hinge pins, especially for use with doors and gates, comprising
- a bearing block (10) formed with a bearing bore (12) which has a central axis (A),
- a rotary member (14) which is supported in the bearing bore (12) for rotational adjustment about the cental axis (A),
- at least one receiving bore (16) formed in the rotary member (14) to receive a journal or hinge pin (42) and having a receiving axis (B) which differs from the central axis (A),
- a transverse bore (20) which extends transversely to the bearing bore (12), penetrating the same, through the beraring block (10), and
- a setscrew (22) which is retained in the transverse bore (20) to be rotatable but not movable axially, and which engages a toothing (30) formed in the rotary member (14) in the manner of a worm gear toothing,
- so that a rotary movement of the setscrew (22) can be transmitted to the rotary member (14) via said toothing (30),
characterized in that the rotary member (14) comprises at least a section of a prepared annular groove (18) in which the worm gear-type toothing (30) is formed as the setscrew (22) is turned.

3. The adjustable support according to claim 2,
characterized in that the receiving axis (B) extends parallelly to the central axis (A).

4. The adjustable support according to claim 2,
characterized in that the receiving axis (B) extends at an acute angle with respect to the cental axis (A).

5. The adjustable support according to any one of claims 2 to 4,
characterized in that the rotary member (14) comprises two or more receiving bores (16, 16') of different diameters and/or at different spacings from the central axis (A).

6. The adjustable support according to any one of claims 2 to 5,
characterized in that the rotary member (14) is made of a soft metal such as aluminium or zinc casting.

7. The adjustable support according to any one of claims 2 to 5,
characterized in that the rotary member (14) is made of plastics material such as polyamide or polyurethane.

## Revendications

1. Procédé d'assemblage et de réglage d'une fixation de tourillons et de pivots, en particulier pour portes et pour portails, comprenant
- un palier (10) présentant un alésage de palier (12) possédant un axe central (A),
- un élément tournant (14) qui est logé réglable en orientation autour de l'axe central (A) dans l'alésage de palier (12),
- au moins un alésage de réception (16) formé dans l'élément tournant (14), destiné à recevoir un tourillon ou un pivot (42) et possédant un axe de réception (B) distinct de l'axe central (A),
- un alésage transversal (20) qui s'étend à travers le palier (10) transversalement par rapport à l'alésage de palier (12) en pénétrant dans celui-ci, et
- une vis de réglage (22) qui est maintenue avec possibilité de rotation mais sans possibilité de coulissement axial dans l'alésage transversal (20) et qui engrène avec une denture de type hélicoïdal (30) formée dans l'élément tournant (14),
- de telle manière qu'un mouvement de rotation de la vis de réglage (22) puisse être transmis par l'intermédiaire de cette denture (30) à l'élément tournant (14),
caractérisé en ce que
- l'élément tournant (14) à l'état encore sans denture est introduit par coulissement avec une orientation quelconque dans le palier (10),
- la vis de réglage (22) est introduite en la tournant dans l'alésage transversal (20), son filetage (26) entaillant l'élément tournant (14) et y formant une partie de la denture (30), et
- le formage de la denture (30) est au besoin poursuivi en tournant davantage la vis de réglage (22) après l'avoir bloquée dans une position axiale déterminée.

2. Fixation réglable de tourillons et de pivots, en particulier pour portes et pour portails, pour la mise en oeuvre du procédé selon la revendication 1, comprenant
- un palier (10) présentant un alésage de palier (12) possédant un axe central (A),
- un élément tournant (14) qui est logé réglable en orientation autour de l'axe central (A) dans l'alésage de palier (12),
- au moins un alésage de réception (16) formé dans l'élément tournant (14), destiné à recevoir un tourillon ou un pivot (42) et possédant un axe de réception (B) distinct de l'axe central (A),
- un alésage transversal (20) qui s'étend à travers le palier (10) transversalement par rapport à l'alésage de palier (12) en pénétrant dans celui-ci, et
- une vis de réglage (22) qui est maintenue avec possibilité de rotation mais sans possibilité de coulissement axial dans l'alésage transversal (20) et qui engrène avec une denture de type hélicoïdal (30) formée dans l'élément tournant (14),
- de telle manière qu'un mouvement de rotation de la vis de réglage (22) puisse être transmis par l'intermédiaire de cette denture (30) à l'élément tournant (14),
caractérisée en ce que l'élément tournant (14) présente au moins une portion d'une gorge annulaire (18) préparée dans laquelle se forme la denture de type hélicoïdal (30) lors de la rotation de la vis de réglage (22).

3. Fixation réglable selon la revendication 2,
caractérisée en ce que l'axe de réception (B) s'étend parallèlement à l'axe central (A).

4. Fixation réglable selon la revendication 2,
caractérisée en ce que l'axe de réception (B) fait un angle aigu avec l'axe central (A).

5. Fixation réglable selon l'une quelconque des revendications 2 à 4,
caractérisée en ce que l'élément tournant (14) présente deux ou plusieurs alésages de réception (16, 16') de diamètres différents et/ou situés à des distances différentes de l'axe central (A).

6. Fixation réglable selon l'une quelconque des revendications 2 à 5,
caractérisée en ce que l'élément tournant (14) est en métal doux comme la fonte d'aluminium ou de zinc.

7. Fixation réglable selon l'une quelconque des revendications 2 à 5,
caractérisée en ce que l'élément tournant (14) est en matière plastique comme le polyamide ou le polyuréthanne.
